# EUROPÄISCHE PATENTSCHRIFT

(11) **EP 1 502 806 B1**
(45) Veröffentlichungstag und Bekanntmachung des Hinweises auf die Patenterteilung: **28.10.2009**
(21) Anmeldenummer: 04016814.8
(22) Anmeldetag: 16.07.2004
(51) Int. Cl.: B60N 2/20, B60N 2/22

(54) **Beschlag für einen Fahrzeugsitz**
Hinge for a vehicle seat
Articulation pour un siège de véhicule

(30) Priorität: 26.07.2003 DE 10334221
(43) Veröffentlichungstag der Anmeldung: 02.02.2005
(73) Patentinhaber: KEIPER GmbH & Co. KG, 67657 Kaiserslautern (DE)
(72) Erfinder: Schramm, Erec, 67659 Kaiserslautern (DE)
(74) Vertreter: Patentanwälte Hosenthien-Held und Dr. Held

(56) Entgegenhaltungen:
- DE-A1- 10 035 251
- DE-A1- 10 035 252
- PATENT ABSTRACTS OF JAPAN Bd. 1999, Nr. 05, 31. Mai 1999 (1999-05-31) -& JP 11 042136 A (TAKASHIMAYA NIPPATSU KOGYO KK), 16. Februar 1999 (1999-02-16)
- PATENT ABSTRACTS OF JAPAN Bd. 1998, Nr. 02, 30. Januar 1998 (1998-01-30) -& JP 09 276063 A (KAWAMURA KAKO KK), 28. Oktober 1997 (1997-10-28)

## Beschreibung

Die Erfindung betrifft einen Beschlag für einen Fahrzeugsitz, insbesondere für einen Kraftfahrzeugsitz, mit den Merkmalen des Oberbegriffs des Anspruches 1.

Aus der DE 100 35 252 A1, DE 100 35 251 A1 und DE 100 56 033 A1 sind Beschläge mit verschiedenen Beschlagsverblendungen bekannt, um den für die Schwenkbewegung des eintauchenden Beschlagteils relativ zum gehäuseartigen Beschlagteil notwendigen Spalt im gehäuseartigen Beschlagteil und/oder die Kante des eintauchenden Beschlagteils bei einer Schwenkbewegung nach vorne und nach hinten jeweils abzudecken. Als gesondert ausgebildete und gesondert angebrachte Beschlagsverblendungen werden elastische Bänder oder Gliederketten entlang des Spaltes bzw. der Kante oder eine Vielzahl von flexiblen Elementen quer dazu vorgeschlagen.

Der Erfindung liegt die Aufgabe zu Grunde, einen Beschlag der eingangs genannten Art zu verbessern. Diese Aufgabe wird erfindungsgemäß durch einen Beschlag mit den Merkmalen des Anspruches 1 gelöst. Vorteilhafte Ausgestaltungen sind Gegenstand der Unteransprüche.

Dadurch, daß die Beschlagsverblendung an einem Gleiter angebracht ist, welcher in axialer Richtung zwischen zwei Beschlagteilen und/oder einem Beschlagteil und einem Halteblech angeordnet ist, kann die Beschlagsverblendung vormontiert oder einstückig mit dem an sich bereits vorhandenen Gleiter ausgebildet werden, so daß die Anzahl der für die Montage des Beschlags notwendigen Bauteile gleich bleibt und der Montageaufwand nicht wesentlich erhöht wird. Der Gleiter wird dann zum Multifunktionsteil, das außer der Verbesserung des Aneinandergleitens der Beschlagteile noch einen Schutz für das Innere des Beschlags gegen Schmutz und Beschädigungen, insbesondere vor eindringenden Fremdkörpern, bietet.

Die Herstellung ist besonders einfach, wenn die Beschlagsverblendung als wenigstens eine am Gleiter angeformte, bewegliche Lasche ausgebildet ist, so daß beispielsweise mit einem kostengünstigen Spritzgußverfahren der Gleiter mit den Laschen und Befestigungselementen, wie Klemmlaschen und Butzen, einstückig hergestellt werden kann. Die Lasche ist besonders gut beweglich und damit flexibel gegenüber Relativbewegungen der Beschlagteile, wenn sie mittels eines Filmscharniers am Gleiter angeformt ist. Eine hohe Schutzwirkung durch eine gute Anlage der Lasche am Beschlagteil ergibt sich, wenn die Lasche an einem in axialer Richtung vom Hauptteil des Gleiters abstehenden Endabschnitt angeformt ist, in Umfangsrichtung ausgerichtet ist und unter Vorspannung am Beschlagteil anliegt. Vorzugsweise ist an jedem Ende des Gleiters wenigstens eine Lasche angeformt, und dabei vorzugsweise für mehrere Beschlagteile jeweils eine Lasche, um möglichst alle Beschlagteile zu verblenden.

Der Einsatz der Beschlagsverblendung ist bei Beschlägen mit einer Neigungseinstellung und einer zentralen Freischwenkfunktion bevorzugt, bei denen drei Beschlagteile und ein Halteblech in axialer Richtung nebeneinander angeordnet sind, so daß zu verblendende Hohlräume entstehen können. Das Freischwenken soll vorliegend auch den Übergang in eine Tischstellung der Lehne mit nahezu horizontal ausgerichteter Lehnenrückseite begrifflich umfassen.

Die Erfindung kann für alle Fahrzeugsitze mit schwenkbarer Lehne eingesetzt werden, beispielsweise für Vordersitze mit freischwenkbarer Lehne in zweitürigen Kraftfahrzeugen mit einer Rücksitzanlage oder Beifahrersitze mit einer Tischstellung der Lehne.

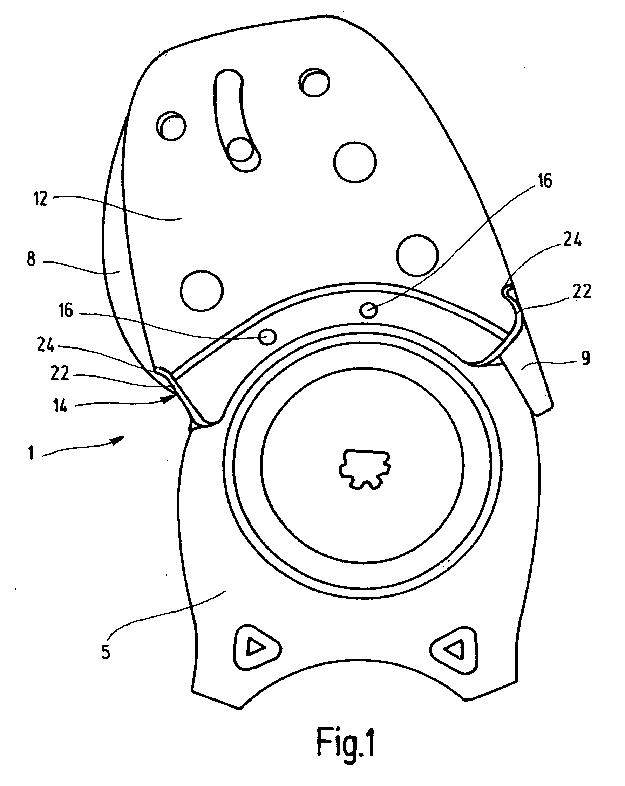

Im folgenden ist die Erfindung anhand eines in der Zeichnung dargestellter Ausführungsbeispiels näher erläutert. Es zeigen
- Fig. 1: eine Seitenansicht des Ausführungsbeispiels,

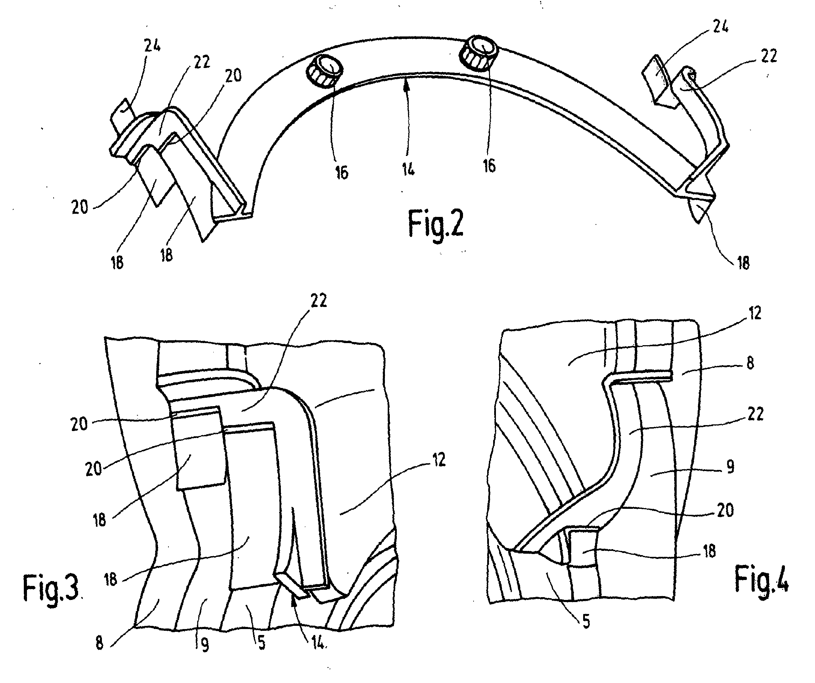

- Fig. 2: eine perspektivische Ansicht des Gleiters,
- Fig. 3: eine perspektivische Teilansicht des Ausführungsbeispiels am vorderen Ende des Gleiters,
- Fig. 4: eine perspektivische Teilansicht des Ausführungsbeispiels am hinteren Ende des Gleiters,

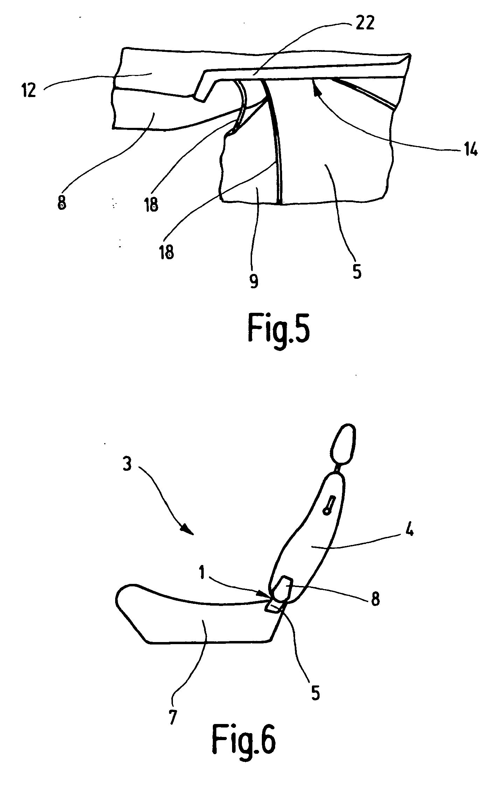

- Fig. 5: eine seitliche Teilansicht des Ausführungsbeispiels am vorderen Ende des Gleiters mit freigeschwenkter Lehne, und
- Fig. 6: eine schematische Seitenansicht eines Fahrzeugsitzes.

Ein Beschlag 1 für einen Fahrzeugsitz 3 eines zweitürigen Kraftfahrzeuges dient der Neigungseinstellung und dem Freischwenken der Lehne 4 des Fahrzeugsitzes 3. Die Bewegungsmöglichkeiten des Beschlags 1, die Anordnung des Fahrzeugsitzes 3 innerhalb des Kraftfahrzeuges und dessen gewöhnliche Fahrtrichtung bestimmen die nachfolgend verwendeten Richtungsangaben. Auf jeder Seite des Fahrzeugsitzes 3 ist ein Beschlag 1 vorgesehen, der mit einem Beschlagunterteil 5 am Sitzteil 7 des Fahrzeugsitzes 3 und mit einem Beschlagoberteil 8 an der Lehne 4 angebracht ist.

Ein axial zwischen dem Beschlagunterteil 5 und dem Beschlagoberteil 8 angeordnetes Beschlagzwischenteil 9 wirkt mit dem Beschlagunterteil 5 zur Neigungseinstellung der Lehne 4 zusammen, und zwar in einer an sich bekannten Weise als Getriebebeschlag oder als Rastbeschlag. Während der Neigungseinstellung ist das Beschlagoberteil 8 mit dem Beschlagzwischenteil 9 verriegelt, d.h. das Beschlagzwischenteil 9 wird vom schwenkenden Beschlagoberteil 8 mitgenommen. Zum zentrischen, d.h. um die durch das Zentrum des Beschlagzwischenteil 9 definierte Achse erfolgenden Freischwenken der Lehne 4, mit welchem der Zugang zur Rücksitzanlage ermöglicht wird, wird das Beschlagoberteil 8 entriegelt und relativ zum Beschlagzwischenteil 9 verschwenkt. Die durch die Relativanordnung zwischen dem Beschlagzwischenteil 9 und dem Beschlagunterteil 5 definierte Lehnenneigung bleibt gespeichert.

Für den axialen Zusammenhalt von Beschlagunterteil 5, Beschlagzwischenteil 9 und Beschlagoberteil 8 ist am oberen Ende des Beschlags 1 ein Halteblech 12 vorgesehen, welches am Beschlagoberteil 8 angebracht ist, mit diesem einen Bauraum für die Bauteile definiert, die für die Freischwenkfunktion notwendig sind, und zugleich das Beschlagunterteil 5 an dessen oberem Rand auf etwa einem Viertel des Umfangs übergreift. Um eine direkte Reibung zwischen dem Halteblech 12 und dem Beschlagunterteil 5 zu vermeiden, ist ein Gleiter 14 aus Kunststoff auf der Innenseite des Halteblechs 12 mittels Butzen 16 in Öffnungen es Halteblechs 12 eingepreßt. Beim Zusammenbau wird unter Ausnutzung der elastischen Materialeigenschaften des Gleiters 14 eine gewisse Vorspannung aufgebaut, die der Spielfreistellung dient, aber trotzdem eine Leichtgängigkeit bei der Schwenkbewegung gewährleistet. Ein gleichwirkendes Halteblech mit Gleiter ist am unteren Ende des Beschlags 1 am Beschlagunterteil 5 angebracht und übergreift das Beschlagzwischenteil 9 und das Beschlagoberteil 8.

Erfindungsgemäß sind an den beiden Enden des Gleiters 14 Laschen 18 in der Art von Abkröpfungen angeformt, die über Filmscharniere 20 an ihrem jeweils oberen Ende in Verbindung mit einem axial verlaufenden Endabschnitt 22 des Gleiters 14 stehen. Dabei sind am vorderen Ende des Gleiters 14 zwei bewegliche Laschen 18 in axialer Richtung nebeneinander vorgesehen, von denen eine mit Vorspannung am Beschlagunterteil 5 und eine mit Vorspannung am Beschlagzwischenteil 9 federnd anliegt. Am hinteren Ende des Gleiters 14 ist eine bewegliche Lasche 18 vorgesehen, welche mit Vorspannung am Beschlagunterteil 5 anliegt. Die Laschen 18 verschließen somit die stirnseitigen Enden eines Hohlraums zwischen dem Halteblech 12 und dem Beschlagzwischenteil 9 und Beschlagunterteil 5. Die Endabschnitte 22 des Gleiters 14 enden auf beiden Seiten mit Klemmlaschen 24, welche am Halteblech 12 eingesteckt sind.

Bei Freischwenken der Lehne 4 werden durch die Schwenkbewegung von Beschlagoberteil 8 und Halteblech 12 die beiden vorderen Laschen 18 relativ zu den Endabschnitten 22 des Gleiters 14 stark gebogen, wobei die Filmscharniere 20 die Bewegungen ausgleichen. Die hintere Lasche 18 gleitet am Beschlagunterteil 5 entlang. In allen Stellungen des Beschlagoberteils 8 werden dabei die stirnseitigen Enden des genannten Hohlraums verschlossen gehalten.

### Bezugszeichenliste

- 1: Beschlag
- 3: Fahrzeugsitz
- 4: Lehne
- 5: Beschlagunterteil
- 7: Sitzteil
- 8: Beschlagoberteil
- 9: Beschlagzwischenteil
- 12: Halteblech
- 14: Gleiter
- 16: Butzen
- 18: Lasche, Beschlagsverblendung
- 20: Filmscharnier
- 22: Endabschnitt
- 24: Klemmlasche

## Patentansprüche

1. Beschlag für einen Fahrzeugsitz, insbesondere für einen Kraftfahrzeugsitz, mit wenigstens zwei relativ zueinander um eine Achse verschwenkbaren Beschlagteilen (5, 8, 9), wenigstens einem Halteblech (12) zur axialen Sicherung der Beschlagteile (5, 8, 9) und wenigstens einer bezüglich der Achse in radialer Richtung wirksamen Beschlagsverblendung (18), **dadurch gekennzeichnet, daß** die Beschlagsverblendung (18) an einem Gleiter (14) angebracht ist, welcher in axialer Richtung zwischen zwei Beschlagteilen (5, 8, 9) und/oder einem Beschlagteil (5, 8, 9) und einem Halteblech (12) angeordnet ist.

2. Beschlag nach Anspruch 1, **dadurch gekennzeichnet, daß** die Beschlagsverblendung als wenigstens eine am Gleiter (14) angeformte, bewegliche Lasche (18) ausgebildet ist.

3. Beschlag nach Anspruch 2, **dadurch gekennzeichnet, daß** die Lasche (18) an einem Endabschnitt (22) des Gleiters (14) angeformt ist, welcher vom Hauptteil des Gleiters (14) in axialer Richtung absteht.

4. Beschlag nach Anspruch 3, **dadurch gekennzeichnet, daß** der Endabschnitt (22) mittels einer Klemmlasche (24) am Beschlagteil (5, 8, 9) oder am Halteblech (12) angebracht ist.

5. Beschlag nach einem der Ansprüche 2 bis 4, **dadurch gekennzeichnet, daß** die Lasche (18) mittels eines Filmscharniers (20) beweglich am Gleiter (14) angeformt ist.

6. Beschlag nach einem der Ansprüche 2 bis 5, **dadurch gekennzeichnet, daß** die Lasche (18) in Umfangsrichtung ausgerichtet ist und unter Vorspannung am Beschlagteil (5, 8, 9) anliegt.

7. Beschlag nach einem der Ansprüche 2 bis 6, **dadurch gekennzeichnet, daß** an jedem Ende des Gleiters (14) wenigstens eine Lasche (18) angeformt ist.

8. Beschlag nach einem der Ansprüche 1 bis 7, **dadurch gekennzeichnet, daß** der Gleiter (14) aus Kunststoff gefertigt ist.

9. Beschlag nach einem der Ansprüche 1 bis 8, **dadurch gekennzeichnet, daß** der Beschlag (1) einer Neigungseinstellung und einem zentralen Freischwenken einer Lehne (4) dient.

10. Fahrzeugsitz, insbesondere Kraftfahrzeugsitz, mit einer relativ zu einem Sitzteil (7) schwenkbaren Lehne (4), **gekennzeichnet durch** zwei Beschläge nach einem der Ansprüche 1 bis 9.

## Claims

1. A fitting for a vehicle seat, in particular for a motor vehicle seat, having at least two fitting parts (5, 8, 9) pivotable relative to one another about an axis, at least one retainer plate (12) for axial securing of the fitting parts (5, 8, 9) and at least one fitting covering (18) effective in a radial direction with respect to the axis, **characterised in that** the fitting covering (18) is mounted on a slide (14), which is arranged in the axial direction between two fitting parts (5, 8, 9) and/or a fitting part (5, 8, 9) and a retainer plate (12).

2. A fitting according to claim 1, **characterised in that** the fitting covering is in the form of at least one flexible tongue (18) integrally formed with the slide (14).

3. A fitting according to claim 2, **characterised in that** the tongue (18) is integrally formed at an end portion (22) of the slide (14) that projects in the axial direction from the main part of the slide (14).

4. A fitting according to claim 3, **characterised in that** the end portion (22) is mounted on the fitting part (5, 8, 9) or on the retainer plate (12) by means of a clamping lug (24).

5. A fitting according to any one of claims 2 to 4, **characterised in that** the tongue (18) is movably integrally formed with the slide (14) by means of a film hinge (20).

6. A fitting according to any one of claims 2 to 5, **characterised in that** the tongue (18) is aligned in the circumferential direction and abuts under prestress the fitting part (5, 8, 9).

7. A fitting according to any one of claims 2 to 6, **characterised in that** at least one tongue (18) is integrally formed at each end of the slide (14).

8. A fitting according to any one of claims 1 to 7, **characterised in that** the slide (14) is made of plastics material.

9. A fitting according to any one of claims 1 to 8, **characterised in that** the fitting (1) serves for adjustment of the inclination of a backrest (4) and for a central free pivoting thereof.

10. A vehicle seat, in particular a motor vehicle seat, having a backrest (4) pivotable relative to a seat part (7), **characterised by** two fittings according to any one of claims 1 to 9.

## Revendications

1. Armature pour un siège de véhicule, en particulier pour un siège de véhicule automobile, comportant au moins deux parties d'armature (5, 8, 9) aptes à pivoter l'une par rapport à l'autre autour d'un axe, au moins une tôle de retenue (12) pour la fixation axiale des parties d'armature (5, 8, 9) et au moins un recouvrement d'armature (18) actif relativement à l'axe dans la direction radiale, **caractérisée par le fait que** le recouvrement d'armature (18) est fixé à un élément coulissant (14), lequel est disposé dans la direction axiale entre deux parties d'armature (5, 8, 9) et/ou une partie d'armature (5, 8, 9) et une tôle de retenue (12).

2. Armature selon la revendication 1, **caractérisée par le fait que** le recouvrement d'armature est réalisé sous la forme d'au moins une patte mobile (18), moulée sur l'élément coulissant (14).

3. Armature selon la revendication 2, **caractérisée par le fait que** la patte (18) est moulée sur une section d'extrémité (22) de l'élément coulissant (14), laquelle est éloignée de la partie principale de l'élément coulissant (14) dans la direction axiale.

4. Armature selon la revendication 3, **caractérisée par le fait que** la section d'extrémité (22) est rapportée au moyen d'une patte de serrage (24) sur la partie d'armature (5, 8, 9) ou sur la tôle de retenue (12).

5. Armature selon l'une des revendications 2 à 4, **caractérisée par le fait que** la patte (18) est moulée de façon mobile sur l'élément coulissant (14) au moyen d'une charnière-film (20).

6. Armature selon l'une des revendications 2 à 5, **caractérisée par le fait que** la patte (18) est orientée dans la direction périphérique et en appui sous précontrainte sur la partie d'armature (5, 8, 9).

7. Armature selon l'une des revendications 2 à 6, **caractérisée par le fait que**, sur chaque extrémité de l'élément coulissant (14) est moulée au moins une patte (18).

8. Armature selon l'une des revendications 1 à 7, **caractérisée par le fait que** l'élément coulissant (14) est fait de matière plastique.

9. Armature selon l'une des revendications 1 à 8, **caractérisée par le fait que** l'armature (1) sert au réglage d'inclinaison et au pivotement libre central d'un dossier (4).

10. Siège de véhicule, en particulier siège de véhicule automobile, comportant un dossier (4) apte à pivoter par rapport à une partie d'assise (7), **caractérisé par** deux armatures selon l'une quelconque des revendications 1 à 9.
